# EUROPÄISCHE PATENTANMELDUNG

(11) **EP 1 927 687 A2**
(43) Veröffentlichungstag der Anmeldung: **04.06.2008**
(21) Anmeldenummer: 07118216.6
(22) Anmeldetag: 10.10.2007
(51) Int. Cl.: D01H 4/12

(54) **Offenend-Spinnvorrichtung mit einem aerostatischen Axiallager für einen Spinnrotor, aerostatisches Axiallager sowie Verfahren zur Herstellung eines aerostatischen Axiallagers**

(30) Priorität: 29.11.2006 DE 102006056279
(71) Anmelder: Rieter Ingolstadt GmbH, 85055 Ingolstadt (DE)
(72) Erfinder: Schuller, Edmund, 85055, Ingolstadt (DE); Knabel, Manfred, 85055, Ingolstadt (DE)
(74) Vertreter: Bergmeier, Werner

(57) **Zusammenfassung**

Eine Offenend-Spinnvorrichtung (1) weist einen Spinnrotor (2) auf, dessen Schaftende (11) durch ein aerostatisches Axiallager (10) mit einem Luftspalt (18) zwischen einer Lagerplatte (17) des Axiallagers (10) und dem Schaftende (11) abgestützt ist. Das aerostatische Axiallager (10) umfasst eine Lagerplatte (17) und eine der Lagerplatte (17) vorgeschaltete Drosselvorrichtung (19) aus einem porösen Kohlenstoffwerkstoff. Die Drosselvorrichtung (19) ist ein gesenkgepresster, tablettenförmiger Pressling mit weitgehend homogener Porosität. Bei einem Verfahren zur Herstellung eines aerostatischen Axiallagers (10) für einen Spinnrotor (2) einer Offenend-Spinnvorrichtung (1) wird dem Axiallager (10) eine Drosselvorrichtung (19) aus einem porösen Kohlenstoffwerkstoff vorgeschaltet. Die Drosselvorrichtung (19) wird als tablettenförmiger Pressling in einem Presswerkzeug gesenkgepresst.

## Beschreibung

Die vorliegende Erfindung betrifft eine Offenend-Spinnvorrichtung mit einem Spinnrotor, dessen Schaftende durch ein aerostatisches Axiallager mit einem Luftspalt zwischen einer Lagerplatte des Axiallagers und dem Schaftende abgestützt ist. Die in den Luftspalt des Axiallagers eingebrachte Luft passiert hierbei eine vorgestaltete Drosselvorrichtung aus einem porösen Kohlenstoffwerkstoff. Weiterhin betrifft die Erfindung ein aerostatisches Axiallager für einen Spinnrotor einer Offenend-Spinnvorrichtung sowie ein Verfahren zur Herstellung eines aerostatischen Axiallagers mit einer Drosselvorrichtung aus einem porösen Kohlenstoffwerkstoff für ein aerostatisches Axiallager.

Eine Offenend-Spinnvorrichtung mit einem aerostatischen Axiallager für einen Spinnrotor ist beispielsweise aus der gattungsbildenden EP 0 435 016 B1 bekannt. Das beschriebene aerostatische Lager besitzt eine mit dem Ende des Rotorschaftes zusammenarbeitende Lagerplatte mit einer Lagerfläche, durch die der Luftaustritt in den Luftspalt des Axiallagers erfolgt. Für den Austritt der Luft ist die Lagerplatte mit einer oder auch mehreren Bohrungen versehen. Die Werkstoffe von Lagerplatte und dem Ende des Schaftes bilden eine reibungsarme Werkstoffpaarung. Vor dem Austritt in den Luftspalt passiert die das Lager durchströmende Luft eine Drosselvorrichtung, welche aus einem porösen Werkstoff besteht. Hier werden beispielsweise Sinterwerkstoffe oder Kohlewerkstoffe genannt.

Im Stand der Technik bekannte Drosselvorrichtungen für ein gattungsgemäßes Axiallager werden aus einem stranggepressten Halbzeug aus Kohlewerkstoff gefertigt. Das Rohmaterial wird hierbei bei einer Temperatur von ca. 2.500°C bis 3.000°C stranggepresst, so dass ein zylinderförmiges Halbzeug vorliegt. Von diesem Halbzeug werden in einem weiteren Arbeitsschritt einzelne Scheiben abgestochen, welche als Drosselvorrichtungen in die Axiallager eingesetzt werden.

Um die Belastbarkeit des aerostatischen Axiallagers unter Dauerbetrieb zu erhöhen, schlägt die DE 100 62 106 A1 vor, den Luftdurchsatz mittels einer Vielzahl von Mikrolöchern in der Drosselvorrichtung einzustellen. Bei einer Vielzahl von Löchern im Vergleich zu einem einzelnen oder wenigen Bohrlöchern sollen sich die Bohrabweichungen gegenseitig ausmitteln. Hierdurch soll der Luftdurchsatz genauer eingehalten werden. Die Strömungsmenge durch die Drosselvorrichtung soll hierbei durch Erhöhen oder Verringern der Anzahl der Mikrolöcher eingestellt werden.

Aufgabe der vorliegenden Erfindung ist es, eine Offenend-Spinnvorrichtung mit einem aerostatischen Axiallager vorzuschlagen, welches einen gleichmäßigen Luftdurchsatz ermöglicht, der nur geringen Schwankungen unterworfen ist. Weiterhin soll ein entsprechendes Axiallager für einen Spinnrotor einer Offenend-Spinnvorrichtung und ein Herstellverfahren zur Herstellung eines Axiallagers vorgeschlagen werden.

Bei einer Offenend-Spinnvorrichtung mit einem Spinnrotor ist das Schaftende des Spinnrotors durch ein aerostatisches Axiallager mit einem Luftspalt zwischen einer Lagerplatte des Axiallagers und dem Schaftende abgestützt. Die in den Luftspalt eingebrachte Luft passiert hierbei eine vorgeschaltete Drosselvorrichtung aus einem porösen Kohlenstoffwerkstoff. Erfindungsgemäß ist vorgesehen, dass die Drosselvorrichtung ein gesenkgepresster, tablettenförmiger Pressling mit weitgehend homogener Porosität ist. Bei einem Verfahren zur Herstellung eines aerostatischen Axiallagers für einen Spinnrotor einer Offenend-Spinnvorrichtung wird dem Axiallager eine Drosselvorrichtung aus einem porösen Kohlenstoffwerkstoff vorgeschaltet. Erfindungsgemäß ist vorgesehen, dass die Drosselvorrichtung als tablettenförmiger Pressling in einem Presswerkzeug gesenkgepresst wird. Durch die Ausführung der Drosselvorrichtung als Pressling ist es möglich, eine Drosselvorrichtung mit einer weitgehend homogenen Porosität für das aerostatische Axiallager bereitzustellen. Durch die homogene Porosität kann eine gleichmäßige Drosselwirkung verschiedener Drosselvorrichtungen ermöglicht werden, so dass beim Einsatz in einer Offenend-Spinnmaschine an jeder Offenend-Spinnvorrichtung weitgehend gleiche Bedingungen vorherrschen. Da die Porengröße und Anordnung gleichmäßig ist, ist der Luftdurchsatz durch verschiedene Drosselvorrichtungen nur einer geringen Schwankungsbreite unterworfen. Das aerostatische Lager kann hierdurch mit größerer Genauigkeit hergestellt werden. Hierdurch kann zugleich die Ausschussquote bei der Herstellung vermindert werden. Besonders vorteilhaft ist es, wenn die Drosselvorrichtung aus Graphit hergestellt ist, da dies sehr günstige Reibeigenschaften mit dem Rotorschaft aufweist. Vorzugsweise ist die Drosselvorrichtung aus einem pulverförmigen Graphitwerkstoff gepresst.

Weiterhin ist es vorteilhaft, dass die Oberfläche des Presslings eine homogene Struktur, insbesondere in Bezug auf die Porosität, aufweist. Im Gegensatz zum Stand der Technik, bei welchem durch das Schneiden eines strangförmigen Halbzeuges Unregelmäßigkeiten in der Oberfläche entstehen, weist der erfindungsgemäße tablettenförmige Pressling eine homogene Oberflächenstruktur auf, so dass ein gleichmäßiger Luftdurchsatz an den verschiedenen Axiallagern bzw. Offenend-Spinnvorrichtungen weiter unterstützt wird.

Daneben ist es vorteilhaft, wenn die Durchgangsflächen des Presslings, welche von der Druckluft durchströmt werden, unbearbeitet sind. Hierdurch bleibt die homogene Porenstruktur der Oberfläche erhalten.

Insbesondere ist es vorteilhaft, wenn der Pressling eine offene Porosität zwischen 18% und 32% aufweist. Es hat sich gezeigt, dass hierdurch optimale Verhältnisse in Bezug auf Luftverbrauch und Lagersteifigkeit erreicht werden können. Weiterhin ist es vorteilhaft, wenn der Pressling eine Dichte zwischen 1,4 g/cm³ und 1,6 g/cm³ aufweist.

Gemäß einer Weiterentwicklung der Erfindung ist es vorteilhaft, wenn die Drosselvorrichtung bei vorgegebenem Betriebsdruck einen gegenüber herkömmlichen Drosselvorrichtungen verringerten Luftdurchsatz aufweist. Da die Drosselvorrichtungen einzelner Offenend-Spinnvorrichtungen einen weitgehend gleichmäßigen Luftdurchsatz aufweisen, ist es möglich, den vorgegebenen Luftdurchsatz zu minimieren, um den Druckluftverbrauch an den Spinnvorrichtungen zu senken. Hierdurch werden Energiekosten und somit auch Produktionskosten verringert. Durch eine Reduzierung der durchtretenden Gesamtluftmenge kann die der Luftspalt im Lager gehalten werden und die Steifigkeit des Lagers besonders günstig eingestellt werden.

Nach einer anderen Ausgestaltung der Erfindung ist es vorteilhaft, wenn der Luftdurchsatz durch die Drosselvorrichtung gezielt einstellbar ist. Die Lagereigenschaften, insbesondere die Steifigkeit des Lagers, im Betrieb der Spinnvorrichtung lassen sich hierdurch gezielt beeinflussen.

Eine Einstellung des Luftdurchsatzes durch die Drosselvorrichtung ist einerseits durch die Einstellung der Porosität des Presslinges möglich. In besonders vorteilhafter Ausführung wird der Luftdurchsatz durch die Drosselvorrichtung jedoch durch die Dicke des Presslinges eingestellt. Dies kann in einfacher Weise dadurch geschehen, dass das Presswerkzeug auf verschiedene Dicken des Presslings eingestellt wird. Hierdurch ist es möglich, die Drosselvorrichtung in stets gleichbleibender Qualität und Porosität herzustellen und verschiedene Luftdurchsätze durch Variation der Dicke des Presslings zu realisieren.

Insbesondere ist es vorteilhaft, wenn der Luftdurchsatz im Bereich zwischen 1,2 und 1,4 Normliter pro Minute (NI/min) bei einem Luftdruck von 7 bar liegt. Die gleichmäßige Porosität des Presslings ermöglicht es, den anzustrebenden Luftdurchsatz innerhalb vergleichsweise enger Toleranzen anzugeben und hierdurch für weitgehend gleiche Spinnbedingungen an den verschiedenen Spinnvorrichtungen zu sorgen. Um den Luftdurchsatz an andere Gegebenheiten anzupassen, kann wie erwähnt die Dicke des Presslings durch Einstellungen am Werkzeug variiert werden. Vorzugsweise weist der Pressling eine Dicke zwischen 2,0 und 3,8 mm auf.

Gemäß einer Weiterbildung der Erfindung sind die Lagerplatte und die Drosselvorrichtung einteilig miteinander ausgebildet. Der Luftdurchtritt in den Lagerspalt kann hierbei durch die Poren des Drossel- bzw. Lagerwerkstoffes erfolgen oder es können lagerplattenseitig Bohrungen für den Luftdurchtritt eingebracht werden.

Nach einer anderen Weiterbildung der Erfindung ist es vorteilhaft, wenn die Drosselvorrichtung ein der Lagerplatte vorgeschalteter Einsatz ist. Die Montage der Drosselvorrichtung und die Einstellung des Luftdurchsatzes ist hierdurch in einfacher Weise möglich.

Daneben ist es vorteilhaft, wenn der Pressling auf ein vorgegebenes Passmaß geschliffen ist. Die Drosselvorrichtung kann hierdurch spaltfrei in eine entsprechende Ausnehmung des Axiallagers eingepresst werden, ohne dass hierzu weitere Befestigungsmittel erforderlich sind.

Bei dem erfindungsgemäßen Verfahren zur Herstellung eines aerostatischen Axiallagers wird die Drosselvorrichtung aus einem pulverförmigen Graphitmaterial gepresst. Hierdurch kann eine gleichmäßige Porengröße und -verteilung erreicht werden.

Die Drosselvorrichtung wird vorzugsweise bei einer Temperatur von 1.000°C gepresst. Hierdurch ist es möglich, Drosselvorrichtungen mit weitgehend gleichbleibenden Materialeigenschaften und Luftdurchsätzen unter energetisch günstigen Bedingungen herzustellen. Im Vergleich zu Drosselvorrichtungen des Standes der Technik, welche bei einer Temperatur von 2.500°C bis 3.000°C stranggepresst werden, sind größere Energieeinsparungen möglich.

Vorzugsweise wird der Durchmesser der Drosselvorrichtung nach dem Pressen auf ein vorgegebenes Passmaß geschliffen. Hierdurch wird die Montage in ein entsprechendes Axiallager durch Einpressen erleichtert und es wird gewährleistet, dass die Luft nicht seitlich an der Drosselvorrichtung vorbeiströmen kann.

Besonders vorteilhaft ist es, wenn die Dicke des Presslinges durch eine entsprechende Einstellung der Höhe des Presswerkzeuges eingestellt wird. Hierdurch lassen sich mit einem einzigen Werkzeug verschieden dicke Presslinge herstellen, durch die in einfacher Weise eine Einstellung des Luftdurchsatzes durch die Drosselvorrichtung möglich ist.

Weitere Vorteile der Erfindung werden anhand der nachfolgend beschriebenen Ausführungsbeispiele dargestellt. Es zeigen:
- **Figur 1**: eine erfindungsgemäße Offenend-Spinnvorrichtung im Schnitt,
- Figur 2: ein erfindungsgemäßes aerostatisches Axiallager mit einer Drossel, welche als Einsatz in die Lagerplatte ausgebildet ist,
- **Figur 3**: ein erfindungsgemäßes aerostatisches Axiallager mit einer Drosselvorrichtung, welche einteilig mit der Lagerplatte ausgebildet ist, und
- **Figur 4**: eine Drosselvorrichtung, welche nach dem erfindungsgemäßen Verfahren hergestellt ist.

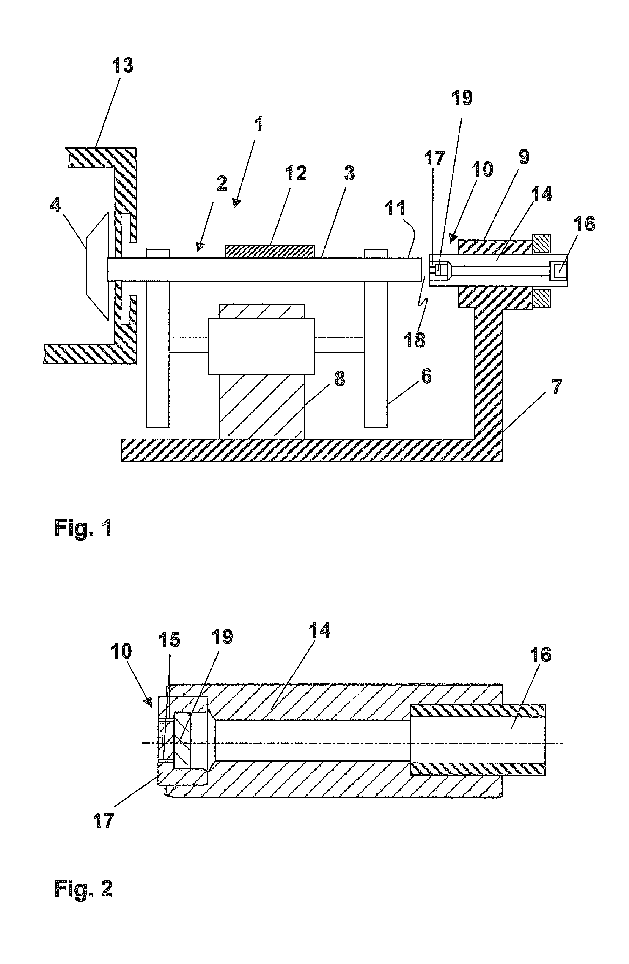

Figur 1 zeigt eine erfindungsgemäß ausgestaltete Offenend-Spinnvorrichtung 1 im Schnitt. Die Offenend-Spinnvorrichtung 1 weist einen Spinnrotor 2 mit einem Schaft 3 sowie einem Rotorteller 4 auf. Der Spinnrotor 2 ist in bekannter Weise in einem Keilspalt von Stützscheiben 6 gelagert. Die Offenend-Spinnvorrichtung 1 weist weiterhin einen Lagerbock 7 auf mit einer Aufnahme 8 für die Lagerungen der Stützscheiben 6 sowie mit einer Aufnahme 9 für ein aerostatisches Axiallager 10. Das Schaftende 11 des Spinnrotors 2 wird axialer Richtung durch das aerostatische Axiallager 10 abgestützt. Zum Antrieb des Spinnrotors 2 ist gemäß der vorliegenden Darstellung ein Tangentialriemen 12 vorgesehen, der sich durch die gesamte Offenend-Spinnmaschine erstreckt und zentral angetrieben wird. Weiterhin verfügt die Offenend-Spinnvorrichtung 1 über ein Rotorgehäuse 13, in welchem der Rotorteller 4 umläuft.

Das Axiallager 10 ist einer Stellbuchse 14 angeordnet, welche in einer entsprechenden Aufnahme 9 des Lagerbockes 7 axial einjustierbar angeordnet ist. Die axiale Position des Lagers 10 wird durch eine Klemmschraube (hier nicht dargestellt) fixiert. Am anderen Ende der Stellbuchse 14 ist ein Anschluss 16 für die Versorgung des Axiallagers 10 mit Druckluft angeordnet. Anstelle der hier dargestellten Stellbuchse 14 kann das Axiallager 10 auch in einer Stellschraube angeordnet sein.

Zwischen dem Schaftende 11 des Spinnrotors 2 und einer Lagerplatte 17 des aerostatischen Axiallagers 10 bildet sich im Betrieb des Axiallagers 10 ein Luftspalt 18 aus, um die axiale Kraft auf den Rotorschaft beim Betrieb der Offenend-Spinnvorrichtung aufzunehmen.

Figur 2 zeigt ein aerostatisches Axiallager 10, welches in einer Stellbuchse 14 aufgenommen ist, in einer Schnittdarstellung. Gemäß der vorliegenden Darstellung ist das Axiallager 10 topfförmig ausgebildet und im Bereich seiner dem Schaftende 11 des Spinnrotors 2 zugewandten Lagerplatte 17 mit kreisförmig angeordneten Bohrungen 15 für den Luftdurchtritt versehen. Anstelle der kreisförmig angeordneten Bohrungen kann die Lagerplatte 17 jedoch ebenso nur eine oder auch mehre Bohrungen in verschiedenster Anordnung für den Austritt der Luft besitzen. Vorzugsweise besteht die Lagerplatte 17 aus einem reibungsarmen Werkstoff, so dass auch bei einem Kontakt der Lagerplatte 17 mit dem Schaftende 11 des Spinnrotors 2 kein übermäßiger Verschleiß des Axiallagers 10 stattfindet. Vorteilhaft ist das Axiallager aus einem Kunststoff mit guten Gleiteigenschaften, insbesondere einem Polyimid, gefertigt. Dieser ist zugleich verschleißarm, so dass eine lange Lebensdauer des Axiallagers erreicht werden kann. Andere Werkstoffe sind jedoch ebenso denkbar.

Auf der dem Axiallager 10 gegenüberliegenden Seite der Stellbuchse 14 ist ein Anschluss 16 für die das Axiallager 10 versorgende Druckluft angeordnet. Die Druckluft durchströmt die Stellbuchse 14 von dem Anschluss 16 zur Lagerplatte 17, wo die Luft in den Luftspalt 18 austritt. Dem Axiallager 10 ist eine Drosselvorrichtung 19 vorgeschaltet, so dass der Luftdurchsatz durch das Axiallager 10 vermindert ist und die Steifigkeit des Lagers vorteilhaft erhöht wird. Die Drosselvorrichtung 19 besteht aus einem porösen Werkstoff, welcher nur einen begrenzten Luftdurchsatz zulässt. Erfindungsgemäß ist die Drosselvorrichtung 19 ein gesenkgepresster, tablettenförmiger Pressling aus einem Kohlenstoffwerkstoff mit einer weitgehend homogenen Porosität.

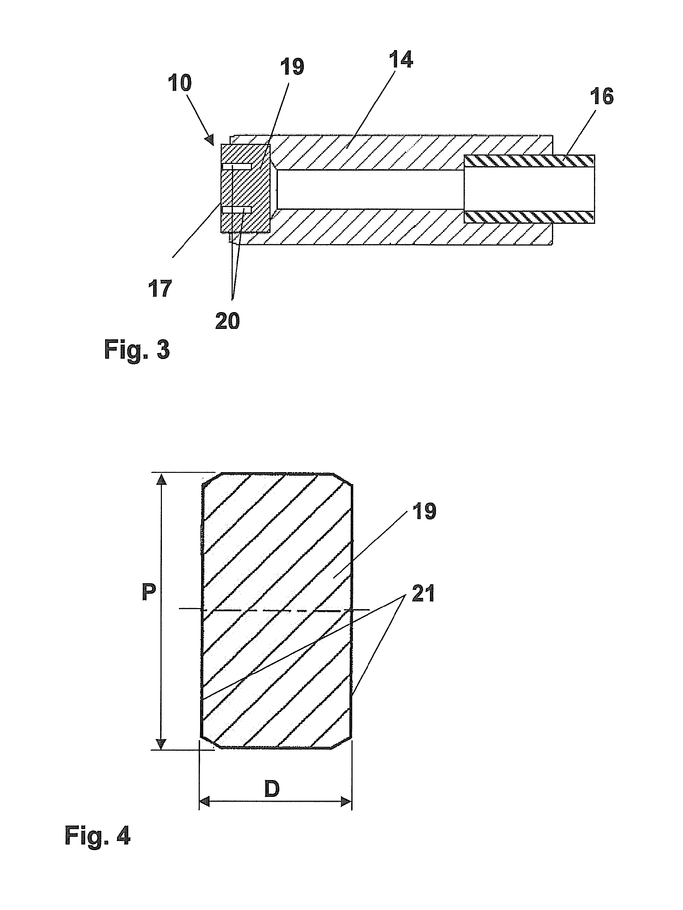

Die Herstellung eines derartigen Presslinges mit weitgehend homogener Porosität erfolgt nach einem erfindungsgemäßen Verfahren, indem die Drosselvorrichtung 19 als tablettenförmiger Pressling in einem Gesenk gepresst wird. Das Ausgangsmaterial ist ein pulverförmiges Graphitmaterial. Hierdurch ist es möglich, Drosselvorrichtungen 19 mit weitgehend gleichbleibenden Eigenschaften herzustellen, so dass der Luftdurchsatz durch die Drosselvorrichtungen 19 nur einer geringen Schwankungsbreite unterworfen ist. Die Drosselvorrichtung 19 kann hierdurch in Bezug auf den Luftdurchsatz exakter hergestellt werden, wobei gleichzeitig die Ausschussquote bei der Herstellung sinkt. Hierdurch ist es in besonders vorteilhafter Weise möglich, einzelne Spinnvorrichtungen 1, welche nebeneinander in einer Offenend-Spinnmaschine angeordnet sind, zentral mit Druckluft zu versorgen. Während im Stand der Technik bekannte Drosselvorrichtungen herstellungsbedingt oftmals Schwankungen im Luftdurchsatz unterworfen waren, können mittels den erfindungsgemäßen Presslingen weitgehend gleiche Betriebsbedingungen an allen Spinnvorrichtungen 1 einer Offenendspinnmaschine auch bei einer zentralen Druckluftversorgung erreicht werden. Anstelle, wie aus dem Stand der Technik bekannt, den Luftdurchsatz durch die Drosselvorrichtung 19 bzw. das gesamte Axiallager 10 durch eine Änderung des Luftdruckes einzustellen, ist es mittels der erfindungsgemäßen Drosselvorrichtung 19, welche als Pressling ausgebildet ist, in einfacher Weise möglich, den Luftdurchsatz durch eine Variation der Dicke D (Fig. 4) des Presslings einzustellen.

Entsprechende Presslinge können nach dem erfindungsgemäßen Verfahren in verschiedenen Dicken D (Fig. 4) in einem Gesenk mit jeweils gleichbleibender Porosität gepresst werden. Um den Luftdurchsatz an bestimmte Vorgaben anzupassen, können Presslinge bzw. Drosselvorrichtungen 19 unterschiedlicher Dicke D in das Axiallager 10 eingesetzt werden. Vorzugsweise wird der Durchmesser der Drosselvorrichtungen 19 nach dem Pressen auf ein vorgegebenes Passmaß P geschliffen und in eine entsprechende Passbohrung des Axiallagers 10 eingepresst. Die Drosselvorrichtung 19 kann hierdurch in einfacher Weise spaltfrei in dem Axiallager 10 montiert werden, so dass ein Vorbeiströmen der Druckluft an der Drosselvorrichtung 19 ausgeschlossen wird.

Da die erfindungsgemäßen Drosselvorrichtungen 19 nur einer geringen Schwankung in Bezug auf den Luftdurchsatz unterworfen sind, ist es möglich, die Axiallager 10 mit einem im Vergleich zum Stand der Technik verringerten Luftdurchsatz zu betreiben. Vorzugsweise weist die Drosselvorrichtung 19 einen Luftdurchsatz zwischen 1,2 und 1,4 NI/min bei 6 bar Überdruck auf. Durch die verringerte in den Luftspalt 18 eintretende Gesamtluftmenge kann der Lagerspalt klein gehalten werden, wodurch eine große Steifigkeit des Lagers erreicht wird. Gleichzeitig kann der Luftverbrauch des Axiallagers 10 und somit die Energiekosten beim Betrieb der Offenend-Spinnvorrichtung 1 verringert werden.

Figur 3 zeigt ein weiteres Axiallager 10 mit einer Drossel 19, welches in einer Stellbuchse 14 angeordnet ist, wobei das Axiallager 10 und die Drossel 19 jedoch einteilig miteinander ausgebildet sind. Das Axiallager 10 ist hierzu im Bereich seiner Lagerplatte 17 mit Sacklochbohrungen 20 versehen, welche einen Luftaustritt in den Luftspalt 18 ermöglichen. Der der Lagerplatte 17 abgewandte Bereich des Axiallagers 10 wirkt durch seine Porosität als Drosselvorrichtung 19. Da das Axiallager 10 bzw. die Drosselvorrichtung 19 aus einem reibungsarmen Kohlenstoffwerkstoff bestehen, tritt auch hier bei einem Kontakt zwischen dem Schaftende 11 des Spinnrotors 2 und der Lagerplatte 17 des Axiallagers 10 nur wenig Verschleiß auf.

Figur 4 zeigt eine Drosselvorrichtung 19, welche nach einem erfindungsgemäßen Verfahren als Pressling mit homogener Porosität in einem Presswerkzeug bei ca. 1000° C gesenkgepresst ist. Im Stand der Technik wurden ähnliche Drosselvorrichtungen 19 aus einem Kohlewerkstoff bei 2.500°C bis 3.000°C stranggepresst. Nach dem Strangpressen wurde das so erhaltene zylindrische Halbzeug schließlich in Scheiben geschnitten, wodurch einzelne Drosselvorrichtungen 19 erhalten wurden. Durch das Schneiden konnte es zu Ungleichmäßigkeiten an der Oberfläche der einzelnen Drosselvorrichtungen kommen. Da bei dem erfindungsgemäßen Verfahren das Ausgangsmaterial nunmehr pulverförmig vorliegt, kann eine homogene und gleichbleibende Porosität der einzelnen Drosselvorrichtungen 19 erreicht werden. Hierdurch sind nur geringe Schwankungen in Bezug auf den Luftdurchsatz zu erwarten. Zugleich sind Energieeinsparungen bei der Herstellung der Drosselvorrichtung 19 möglich, da der tablettenförmige Pressling lediglich bei einer Temperatur von 1.000°C gepresst wird. Weiterhin ist es mittels des erfindungsgemäßen Verfahrens möglich, die Ausschussquote bei den Drosselvorrichtungen 19 zu senken.

Ebenso ist es mittels der erfindungsgemäßen Drosselvorrichtung 19 möglich, den Luftdurchsatz durch die Drosselvorrichtung durch entsprechende Einstellung der Dicke D des Presslings gezielt einzustellen. Dies kann in einfacher Weise durch eine entsprechende Einstellung der Höhe des Presswerkzeuges erfolgen. Hierdurch ist es wiederum möglich, den Luftdurchsatz durch das Axiallager 10 zu minimieren, um Energiekosten zu senken und zugleich die Lagereigenschaften günstig zu beeinflussen. Da der Luftdurchsatz bei erfindungsgemäßen Axiallagern 10 nur wenig schwankt, können auch bei einem minimierten Luftdurchsatz an allen Spinnvorrichtungen 1 einer Offenend-Spinnmaschine gleiche Bedingungen realisiert werden.

Die Erfindung ist nicht auf die dargestellten Ausführungsbeispiele beschränkt. Abwandlungen und Kombinationen im Rahmen der Patentansprüche fallen ebenfalls unter die Erfindung.

## Patentansprüche

1. Offenend-Spinnvorrichtung (1) mit einem Spinnrotor (2), dessen Schaftende (11) durch ein aerostatisches Axiallager (10) mit einem Luftspalt (18) zwischen einer Lagerplatte (17) des Axiallagers (10) und dem Schaftende (11) abgestützt ist, wobei die in den Luftspalt (18) eingebrachte Luft eine vorgeschaltete Drosselvorrichtung (19) aus einem porösen Kohlenstoffwerkstoff passiert, **dadurch gekennzeichnet, dass** die Drosselvorrichtung (19) ein gesenkgepresster, tablettenförmiger Pressling mit weitgehend homogener Porosität ist.

2. Offenend-Spinnvorrichtung nach dem vorhergehenden Anspruch, **dadurch gekennzeichnet, dass** die Oberfläche des Presslings eine homogene Struktur, insbesondere in Bezug auf die Porosität, aufweist.

3. Offenend-Spinnvorrichtung nach einem der vorhergehenden Ansprüche, **dadurch gekennzeichnet, dass** die Durchgangsflächen (21) des Presslings unbearbeitet sind.

4. Offenend-Spinnvorrichtung nach einem der vorhergehenden Ansprüche, **dadurch gekennzeichnet, dass** die Drosselvorrichtung ein Pressling aus einem Graphitpulver ist.

5. Offenend-Spinnvorrichtung nach einem der vorhergehenden Ansprüche, **dadurch gekennzeichnet, dass** der Pressling eine offene Porosität zwischen 18% und 32% aufweist.

6. Offenend-Spinnvorrichtung nach einem der vorhergehenden Ansprüche, **dadurch gekennzeichnet, dass** der Pressling eine Dichte zwischen 1,4 g/cm³ und 1,6 g/cm³aufweist.

7. Offenend-Spinnvorrichtung nach einem der vorhergehenden Ansprüche, **dadurch gekennzeichnet, dass** die Drosselvorrichtung (19) bei vorgegebenem Betriebsdruck einen gegenüber herkömmlichen Drosselvorrichtungen verringerten Luftdurchsatz aufweist.

8. Offenend-Spinnvorrichtung nach einem der vorhergehenden Ansprüche, **dadurch gekennzeichnet, dass** der Luftdurchsatz durch die Drosselvorrichtung (19) gezielt einstellbar ist.

9. Offenend-Spinnvorrichtung nach einem der vorhergehenden Ansprüche, **dadurch gekennzeichnet, dass** der Luftdurchsatz durch die Drosselvorrichtung (19) durch die Dicke (D) des Presslings einstellbar ist.

10. Offenend-Spinnvorrichtung nach einem der vorhergehenden Ansprüche, **dadurch gekennzeichnet, dass** der Pressling eine Dicke (D) zwischen 2,0 mm und 3,8 mm aufweist.

11. Offenend-Spinnvorrichtung nach einem der vorhergehenden Ansprüche, **dadurch gekennzeichnet, dass** die Drosselvorrichtung (19) bei einem vorgegebenen Luftdruck von 7 bar einen Luftdurchsatz im Bereich zwischen 1,2 und 1,4 NI/min aufweist.

12. Offenend-Spinnvorrichtung nach einem der vorhergehenden Ansprüche, **dadurch gekennzeichnet, dass** die Lagerplatte (17) und die Drosselvorrichtung (19) einteilig miteinander ausgebildet sind.

13. Offenend-Spinnvorrichtung nach einem der vorhergehenden Ansprüche, **dadurch gekennzeichnet, dass** die Drosselvorrichtung (19) ein der Lagerplatte (17) vorgeschalteter Einsatz ist.

14. Offenend-Spinnvorrichtung nach einem der vorhergehenden Ansprüche, **dadurch gekennzeichnet, dass** der Durchmesser des Presslings auf ein vorgegebenes Passmaß (P) geschliffen ist.

15. Aerostatisches Axiallager (10) für einen Spinnrotor (2) einer Offenend-Spinnvorrichtung mit einer Lagerplatte (17) und einer der Lagerplatte (17) vorgeschalteten Drosselvorrichtung (19) aus einem porösen Kohlenstoffwerkstoff, **dadurch gekennzeichnet, dass** die Drosselvorrichtung (19) ein gesenkgepresster, tablettenförmiger Pressling mit weitgehend homogener Porosität ist.

16. Aerostatisches Axiallager nach dem vorhergehenden Anspruch, **dadurch gekennzeichnet, dass** die Oberfläche des Presslings eine homogene Struktur, insbesondere in Bezug auf die Porosität, aufweist.

17. Aerostatisches Axiallager nach einem der vorhergehenden Ansprüche, **dadurch gekennzeichnet, dass** die Durchgangsflächen (21) des Presslings unbearbeitet sind.

18. Aerostatisches Axiallager nach einem der vorhergehenden Ansprüche, **dadurch gekennzeichnet, dass** die Drosselvorrichtung ein Pressling aus einem Graphitpulver ist.

19. Aerostatisches Axiallager nach einem der vorhergehenden Ansprüche, **dadurch gekennzeichnet, dass** der Pressling eine offene Porosität zwischen 18% und 32% bei einer Dichte zwischen 1,4 g/cm³ und 1,6 g/cm³ aufweist.

20. Aerostatisches Axiallager nach einem der vorhergehenden Ansprüche, **dadurch gekennzeichnet, dass** die Drosselvorrichtung (19) bei vorgegebenem Betriebsdruck einen gegenüber herkömmlichen Drosselvorrichtungen (19) verringerten Luftdurchsatz aufweist.

21. Aerostatisches Axiallager nach einem der vorhergehenden Ansprüche, **dadurch gekennzeichnet, dass** der Luftdurchsatz durch die Drosselvorrichtung (19) durch die Dicke (D) des Presslings einstellbar ist.

22. Aerostatisches Axiallager nach einem der vorhergehenden Ansprüche, **dadurch gekennzeichnet, dass** die Drosselvorrichtung (19) bei einem Luftdruck von 7 bar einen Luftdurchsatz im Bereich zwischen 1,2 und 1,4 NI/min aufweist.

23. Aerostatisches Axiallager nach einem der vorhergehenden Ansprüche, **dadurch gekennzeichnet, dass** die Lagerplatte (17) und die Drosselvorrichtung (19) einteilig miteinander ausgebildet sind.

24. Aerostatisches Axiallager nach einem der vorhergehenden Ansprüche, **dadurch gekennzeichnet, dass** die Drosselvorrichtung (19) ein der Lagerplatte (17) vorgeschalteter Einsatz ist.

25. Aerostatisches Axiallager nach einem der vorhergehenden Ansprüche, **dadurch gekennzeichnet, dass** der Durchmesser des Presslings auf ein vorgegebenes Passmaß (P) geschliffen ist.

26. Verfahren zur Herstellung eines aerostatischen Axiallagers (10) für einen Spinnrotor (2) einer Offenend-Spinnvorrichtung (1), bei welchem dem Axiallager (10) eine Drosselvorrichtung (19) aus einem porösen Kohlenstoffwerkstoff vorgeschaltet wird, **dadurch gekennzeichnet, dass** die Drosselvorrichtung (19) als tablettenförmiger Pressling in einem Presswerkzeug gesenkgepresst wird.

27. Verfahren nach dem vorhergehenden Anspruch, **dadurch gekennzeichnet, dass** die Drosselvorrichtung (19) aus einem pulverförmigen Graphitmaterial gepresst wird.

28. Verfahren nach dem vorhergehenden Anspruch, **dadurch gekennzeichnet, dass** die Drosselvorrichtung (19) bei einer Temperatur von 1.000°C gepresst wird.

29. Verfahren nach einem der vorhergehenden Ansprüche, **dadurch gekennzeichnet, dass** der Durchmesser der Drosselvorrichtung (19) nach dem Pressen auf ein vorgegebenes Passmaß (P) geschliffen wird.

30. Verfahren nach einem der vorhergehenden Ansprüche, **dadurch gekennzeichnet, dass** die auf ein vorgegebenes Passmaß (P) geschliffene Drosselvorrichtung (19) in eine Aufnahme des Axiallagers (10) eingepresst wird.

31. Verfahren nach einem der vorhergehenden Ansprüche, **dadurch gekennzeichnet, dass** die Dicke (D) des Presslings durch entsprechende Einstellung des Presswerkzeugs eingestellt wird.
